# EUROPEAN PATENT SPECIFICATION

(11) **EP 0 726 228 B1**
(45) Date of publication and mention of the grant of the patent: **17.05.2000**
(21) Application number: 96300918.8
(22) Date of filing: 09.02.1996
(51) Int. Cl.: C01B 31/00

(54) **Ultrafine particle-enclosing fullerene and production method thereof**
Ultrafeine teilcheneinschliessende Fullerene und deren Herstellungsverfahren
Fullerène contenant des particules ultrafines et son procédé de préparation

(30) Priority: 09.02.1995 JP 2171895
(43) Date of publication of application: 14.08.1996
(73) Proprietor: RESEARCH DEVELOPMENT CORPORATION OF JAPAN, Kawaguchi-shi, Saitama-ken 332 (JP); KABUSHIKI KAISHA TOSHIBA, Kawasaki-shi, Kanagawa-ken (JP)
(72) Inventor: Tanaka, Shun-Ichiro, Yokohama-shi, Kanagawa-ken (JP); Xu, Bing She, Yokohama-shi, Kanagawa-ken (JP)
(74) Representative: BATCHELLOR, KIRK & CO.

(56) References cited:
- US-A- 5 300 203
- US-A- 5 316 636
- US-A- 5 457 343
- CHEMICAL PHYSICS LETTERS, 25 JUNE 1993, NETHERLANDS, vol. 209, no. 1-2, ISSN 0009-2614, pages 99-103, XP000569464 UGARTE D: "How to fill or empty a graphitic onion"
- SOLID STATE COMMUNICATION, vol. 96, no. 7, November 1995, pages 451-457, XP000569486 MORAN-LOPEZ & AL.: "A possible route to macroscopic formation of endohedral fullerenes"
- NATURE, 11 NOV. 1993, UK, vol. 366, no. 6451, ISSN 0028-0836, pages 123-128, XP000569344 BETHUNE D S ET AL: "Atoms in carbon cages: the structure and properties of endohedral fullerenes"
- NATURE, 22-29 DEC. 1994, UK, vol. 372, no. 6508, ISSN 0028-0836, pages 761-765, XP000569346 GUERRET-PLECOURT C ET AL: "Relation between metal electronic structure and morphology of metal compounds inside carbon nanotubes"
- ELECTRONIC PROPERTIES OF FULLERENES. PROCEEDINGS OF THE INTERNATIONAL WINTERSCHOOL ON ELECTRONIC PROPERTIES OF NOVEL MATERIALS, KIRCHBERG, TIROL MARCH 6-13, 1993., pages 78-82, XP000569483 UGARTE D. & AL.: "Generation of graphitic onions"

## Description

This invention relates to an ultrafine particle-enclosing fullerene produced by a novel method and a production method thereof.

Fullerene, represented by, for example C₆₀ is bonded by intermolecular forces, and is a football-like molecule having a highly symmetrical configuration. All carbon atoms in the molecule are equivalent, and are bonded by a covalent bond. Therefore, the fullerene is an extremely stable crystal. The fullerene carbon atoms, for example in the C₆₀ molecule gather to form an fcc structure assuming it to be a large atom, and this fullerene shows metallic mechanical properties such as plastic deformation capability, work hardening, and similar properties. Consequently, fullerene molecules are expected to be applied in various uses as a new carbon material. Furthermore, applications of fullerene as a superconductor material, a catalyst, a nonlinear optical material or similar have been studied based upon the properties of the fullerene itself.

Conventionally, the fullerene such as C₆₀ is produced by an arc discharge method using a carbon rod or a granular carbon material as an electrode, or a laser ablation method irradiating an ultraviolet laser on a graphite surface. The fullerene is produced in a mixed state in a carbon soot, and is extracted by a collector using a filter or benzene.

Higher-order fullerenes (giant fullerenes) known as carbon nanocapsules or carbon nanotubes are included in a soot deposited on the cathode in the above-mentioned arc-discharge. By pulverizing the deposit on the cathode, and then refining pulverized substances using organic solvents such as ethanol, such carbon nanocapsules or carbon nanotubes are obtained. Since both the carbon nanocapsules and the carbon nanotubes have a hollow shape and excellent lubricity and weathering resistance, synthesis of new substances and research into new functionalities are pursued by caging metal atoms, or fine crystals in the hollow portions.

Fullerenes are known incorporating a carbide of rare earths such as La or Y, or incorporating metal fine particles such as Fe, Co or Ni, as a fullerene enclosing other metal atoms, or fine crystals in the hollow portion of the carbon nanocapsule or the carbon nanotube (which products have been referred to as an enclosing fullerene). These are obtained by arc-discharging using a carbon electrode including a powder of metal or oxide and by refining the enclosing fullerene included in the deposit on the cathode. However, the conventional production method for making enclosing fullerenes involves complex processes. In addition, it is difficult to separate the enclosing fullerene from impurities such as a graphite-like substance or an amorphous carbon.

Furthermore, as the giant fullerene, onion-like graphite is found where fullerenes having larger molecular weight are layered in the form of concentric circles surrounding a shell of the core composed of C₆₀. However, only the presence of the onion-like graphite can be identified, its shape and physical properties are not controlled sufficiently, and moreover the enclosing fullerene using the onion-like graphite is not produced.

As described above, the conventional enclosing fullerene is included in the deposit on the cathode obtained by arc-discharge using a carbon electrode including a powder of metal, oxide, or the like. Thereby, the production processes are complex, and separation from impurities such as graphite-like substance, or amorphous carbon is difficult.

Therefore, producing the enclosing fullerene by a relatively simple process which avoids a separation step is needed. Moreover, a technique for producing the enclosing fullerene independently under controlled conditions is needed to produce various types of enclosing fullerenes, for example, to facilitate the search for substances capable of incorporation within the fullerene molecule and to more easily appreciate, operate, and control the physical properties of such fullerenes.

An object of the present invention is thereby to provide an ultrafine particle-enclosing fullerene that can be produced independently by a relative simple process under controlled conditions, and a corresponding production method. Hereinafter throughout the description and claims we designate a fullerene in which an ultrafine particle is enclosed as an ultrafine particle-enclosing fullerene.

A first ultrafine particle-enclosing fullerene according to the present invention comprises a giant fullerene, and an ultrafine particle enclosed in a hollow core portion of said giant fullerene by disposing said particle on said giant fullerene and contracting said giant fullerene using electron beam irradiation.

A second ultrafine particle-enclosing fullerene according to the present invention comprises a giant fullerene formed on a portion by irradiating a high energy beam from one of the following, namely: an electron beam, a corpuscular beam, and a photon upon an amorphous carbon in the presence of an active metal; and a metal ultrafine particle composed of said active metal enclosed in a hollow core portion of said giant fullerene by contracting said giant fullerene by irradiation of such a high energy beam.

A first method for producing an ultrafine particle-enclosing fullerene comprises the steps of producing a giant fullerene on an amorphous carbon film in a vacuum, disposing an ultrafine particle on said giant fullerene and impinging upon it by an electron beam, and enclosing the ultrafine particle in a hollow core portion of the giant fullerene by contracting the giant fullerene by irradiation of an electron beam.

A second method for producing an ultrafine particle-enclosing fullerene according to the present invention comprises the steps of producing a giant fullerene by irradiating in a vacuum a high energy beam from one of the following, namely an electron beam, a corpuscular beam, and a photon upon an amorphous carbon material on which an active metal is disposed and enclosing the ultrafine particle composed of the active metal in a hollow core portion of the giant fullerene by contracting the giant fullerene by further irradiation of the high energy beam.

In other words, the present invention is based upon the discovery of producing an ultrafine particle-enclosing fullerene by contracting a giant fullerene upon which ultrafine particles are disposed by irradiation of e.g. an electron beam, or by contracting a giant fullerene formed by irradiating a high energy beam such as an electron beam, a corpuscular beam, and a photon upon an amorphous carbon substrate under in the presence of an active metal with further irradiation of a high energy beam.

In the first ultrafine particle-enclosing fullerene of the present invention, the ultrafine particles are enclosed in the hollow core portion of the giant fullerene by contracting the giant fullerene by irradiation of the electron beam upon the giant fullerene so as to impinge upon the ultrafine particles disposed thereon. As the giant fullerene upon which the ultrafine particles disposed thereon are to be impinged upon by said radiation, carbon nanocapsules, carbon nanotubes and onion-like graphite are cited as example carbon substrate materials. Production of the particle-enclosing fullerene can be independent and controllable. A giant fullerene starting material, capable of receiving the ultrafine particles for impinging upon by the radiation is preferably 10 to 30 nm in size.

The giant fullerene, independently controllable mentioned above is obtainable by irradiating an electron beam of more than 1 x 10¹⁹ e/cm².sec (2A/cm²) in a vacuum to metastable metal oxide particles disposed on an amorphous carbon film substrate such as i-carbon, for example. As metastable metal oxide particles, Θ-Al₂O₃ particles that are a metastable phase of Al₂O₃, can be used, for example. Moreover, when an electron beam of more than 1 x 10¹⁹ e/cm².sec is irradiated upon the Θ-Al₂O₃ disposed on an amorphous carbon film, carbon atoms are provided as constituent atoms from carbon sources of impurities or as adsorbed atoms which exist on the e-Al₂O₃ surface to produce the giant fullerene such as the carbon nanocapsule, the carbon nanotube, or the onion-like graphite, around the metastable metal oxide particles. the giant fullerene can be obtained independently, thereby the electron beam can be easily irradiated continuously. Therefore, such giant fullerene is suitable for use in production of the first ultrafine particle-enclosing fullerene.

The ultrafine particles used for production of the first ultrafine particle-enclosing fullerene may be derivable, for example, by the electron beam, and be of a size capable of being placed at the top of the giant fullerene. In particular, metal ultrafine particles and compound ultrafine particles having a diameter of 5 to 20 nm are cited as preferred examples. As such metal ultrafine particles, Al ultrafine particles are suitable. This is because Al ultrafine particles are obtained when producing the giant fullerene by irradiating the electron beam upon the said Θ-Al₂O₃ particles, and the Al ultrafine particles comply with the conditions mentioned above. To impinge the radiation upon these ultrafine particles disposed on the top of the giant fullerene molecules, for example, the electron beam can be irradiated upon the ultrafine particles and the ultrafine particles can be moved by controlling the electron beam.

When such an electron beam is irradiated to impinge upon the giant fullerene upon which the ultrafine particles are disposed, the giant fullerene is contracted. As a result of this molecular contraction, the ultrafine particles become enclosed in the hollow core portion of the giant fullerene. An electron beam of more than 1 x 10¹⁹ e/cm².sec (2A/cm²) is suitable and thus preferred. If the intensity of the electron beam is less than 1 x 10¹⁹ e/cm².sec, the carbon atoms can not be sufficiently activated to enable the giant fullerene to be contracted. In other words, an electron beam of more than 1 x 10¹⁹ e/cm².sec apparently provides a localized heating effect and an atom displacement (knock-on) effect to the giant fullerene, enabling the giant fullerene to be contracted. In addition, it is preferable to irradiate the electron beam in a vacuum of 10⁻⁵ Pa or less. If the vacuum in which the electron beam irradiated exceeds 10⁻⁵ Pa, contraction of the giant fullerene may be inhibited, possibly by adsorbing remaining gas atoms.

In the first ultrafine particle-enclosing fullerene of the present invention, various types of enclosing fullerenes can be produced, because the ultrafine particles are preferably initially disposed on the top of the giant fullerene by impinging thereupon with the electron beam or similar such radiation, and then the ultrafine particles become enclosed in the hollow core portion of the giant fullerene by irradiating the electron beam. In addition, it can be judged relatively easily whether various types of substances are capable of becoming enclosed or not. Moreover, the ultrafine particle-enclosing fullerene can be produced separately under controlled conditions. Thereby, physical properties of the fullerene can be more easily appreciated, operated and controlled. In general, irradiating the electron beam under controlled heating conditions is difficult. Therefore, it is significant that the first ultrafine particle enclosing fullerene can be produced on a stage at room temperature.

In the second ultrafine particle-enclosing fullerene of the present invention, an original active metal is enclosed as the ultrafine particle by contracting the giant fullerene with irradiation of a high energy beam, in a hollow core portion of the giant fullerene in the presence of the active metal or metals by irradiating the high energy beam upon an amorphous carbon substrate upon which the active metal is disposed.

As the amorphous carbon used for production of the giant fullerene, i-carbon or the like is cited as an example. As the active metal, ultrafine particles of pure metal having no surface oxide film, for example, pure Al ultrafine particles are cited as an example. A diameter of the metal ultrafine particles as the active metal is preferably in the range from 5 to 100 nm. If the diameter of the metal ultrafine particles exceeds 100 nm, a bottom layer of the amorphous carbon may not be activated sufficiently. Metal ultrafine particles having a diameter of less than 5 nm are difficult to produce. A more preferable diameter of the metal ultrafine particles is in the range from 5 to 20 nm. Methods for producing such metal ultrafine particles is not particularly limited. The metal ultrafine particles can be produced secondarily when producing the giant fullerene.

When a high energy beam such as an electron beam, a corpuscular beam such as an ion beam, or a photon such as a laser is irradiated upon the amorphous carbon substrate including the active metal under the above-mentioned conditions, an atomic arrangement of the amorphous carbon present at the bottom layer of the active metal apparently changes to induce production of a giant fullerene at the bottom of the active metals and in that region. As such a giant fullerene induced, an onion-like graphite is cited as an example. As the high energy beam irradiated in producing such giant fullerene, an electron beam having an intensity of more than 1 x 10¹⁹ e/cm².sec (2A/cm²), a corpuscular beam or a photon having an equal effect which can induce an atom displacement (knock-on) is preferably used. For example, if the intensity of the electron beam is less than 1 x 10¹⁹ e/cm².sec, the amorphous carbon may not be activated sufficiently to produce a giant fullerene. In other words, an electron beam with an intensity of more than 1 x 10¹⁹ e/cm².sec apparently bears a localized heating effect and an atom displacement (knock-on) effect upon the metal ultrafine particle and upon the amorphous carbon. Thereby, the giant fullerene can be produced. In the case of the corpuscular beam or the photon, their effects can be the same as the electron beam. In addition, it is preferable to irradiate such an electron beam in a vacuum of 10⁻⁵ Pa or less. If the vacuum wherein the electron beam is irradiated exceeds 10⁻⁵ Pa, then production of the giant fullerene may be inhibited by adsorbing remaining gas atoms.

In the second ultrafine particle-enclosing fullerene of the present invention, the active metal is enclosed as ultrafine particles in a hollow core portion of the giant fullerene by irradiating the high energy beam upon the giant fullerene produced in the presence of the active metal or metals, which has the effect of contracting the giant fullerene, and by minimizing the active metals such as metal ultrafine particles. The high energy beam irradiated and conditions are preferably the same when contracting the fullerene to enclose the particles as the above-mentioned conditions of producing the giant fullerene. If intensity of the electron beam is less than 1 x 10¹⁹ e/cm².sec, the amorphous carbon may not be activated such that the giant fullerene can be contracted. In other words, an electron beam of intensity more than 1 x 10¹⁹ e/cm².sec apparently imparts a localized heating effect and an atom displacement (knock-on) effect to the giant fullerene. Thereby, the giant fullerene can be contracted. In the case of the corpuscular beam or the photon, the effect can be the same as the electron beam. In addition, if the vacuum wherein the electron beam is irradiated exceeds 10⁻⁵ Pa the contraction of the giant fullerene may be inhibited by the adsorption of any remaining gas atoms.

The above-mentioned second embodiment ultrafine particle-enclosing fullerene of the present invention can be produced selectively and independently in the irradiated portion of the electron beam, or similar such radiation as noted above, and can be effective in the case of producing various types of enclosing fullerenes. Moreover, the ultrafine particle-enclosing fullerene can be produced separately under controlled conditions. Thereby, physical properties of the fullerene can be more easily appreciated, and various uses and applications can be researched and implemented. In addition, it is significant that the second embodiment ultrafine particle-enclosing fullerene can also be produced on a room temperature stage.

In order that the invention may be illustrated, more easily appreciated and readily carried into effect by the notional skilled worker in this art, embodiments thereof will now be described purely by way of non-limiting examples only, with reference to the accompanying drawings, wherein:
Fig. 1A is a schematic diagram illustrating a production stage of an ultrafine particle-enclosing fullerene according to the embodiment 1;
Fig. 1B is a schematic diagram illustrating a production stage of an ultrafine particle-enclosing fullerene according to the embodiment 1 after elapsed time;
Fig. 2A is a schematic diagram illustrating a production stage of an ultrafine particle-enclosing fullerene according to the embodiment 2; and
Fig. 2B is a schematic diagram illustrating a production stage of an ultrafine particle enclosing-fullerene according to the embodiment 2 after elapsed time.

Referring to these drawings the following embodiments are described.

### Embodiment 1

Production of a giant fullerene and metal fine particles will be described. Firstly, spherical Θ-Al₂O₃ particles (purity 99.8%) with a diameter of about 100 nm were prepared. The particles were dispersed in alcohol, applied to an amorphous carbon support film composed of an i-carbon and dried. Secondly, the amorphous carbon support film bearing the above-mentioned spherical Θ-Al₂O₃ particles was placed on a room temperature stage of 200kV HRTEM (JEOL, JEM-2010).

Thirdly, the above-mentioned vacuum room was evacuated to 1 x 10⁻⁵ Pa. Fourthly, an electron beam having an intensity of 1.3 x 10²⁰ e/cm² (20A/cm²) was irradiated upon the Θ-Al₂O₃ particles with a diameter of 100 nm disposed on the carbon support film. By the electron beam irradiation, giant fullerene molecules composed of an onion-like graphite with a diameter of 10 to 30 nm, and Al ultrafine particles with a diameter of 5 to 10 nm were produced on the amorphous carbon support film.

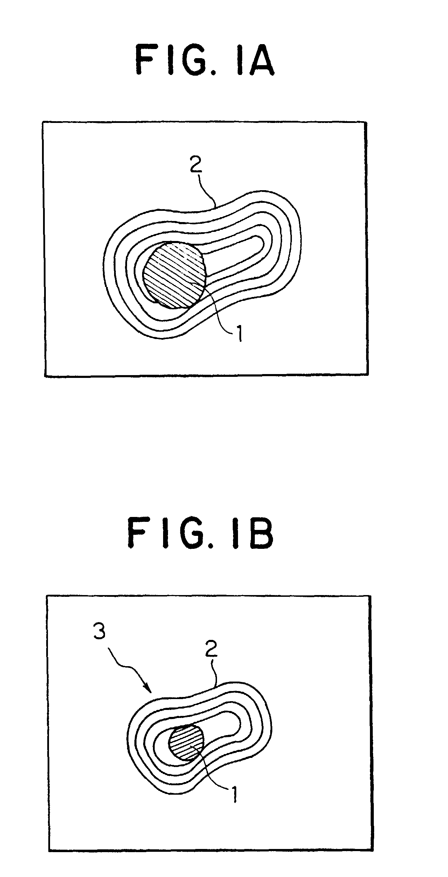

Using the onion-like graphite and the Al ultrafine particles obtained mentioned above, an ultrafine particle enclosing fullerene was produced. A status was observed insitu. The result of the observation will be described with reference to schematic diagrams of Fig. 1. Firstly, the onion-like graphite with a longer diameter of 15 nm and the adjacent Al ultrafine particle with a diameter of 5 nm were selected. An electron beam was irradiated and scanned the Al ultrafine particles. As shown in Fig. 1. A, the Al ultrafine particle 1 was induced and disposed on a top of the onion-like graphite 2.

Secondly, the electron beam (diameter: 250 nm) of 1.3 x 10²⁰ e/cm².sec (20A/cm²) was irradiated upon the onion-like graphite 2 on which the Al ultrafine particle 1 was disposed. After elapsed time of the electron beam irradiation, the onion-like graphite 2 was gradually contracted. After 560 seconds from start of irradiation by the electron beam, it was observed that the Al ultrafine particle 1 was enclosed in a hollow core portion of the onion-like graphite 2 (Al ultrafine particle-enclosing fullerene 3), as shown in Fig. 1B. In the Al ultrafine particle-enclosing fullerene 3, the longer diameter of the onion-like graphite 2 was 10 nm, and the diameter of the Al ultrafine particle in the hollow core portion was 2 nm.

Thus, the Al ultrafine particle-enclosing fullerene 3 was obtained by electron beam irradiation upon the giant fullerene composed of the onion-like graphite 2 and disposed upon which was the Al ultrafine particle 1. The formation of the Al ultrafine particle-enclosing fullerene 3 is apparently based upon both a localized heating effect and an atom displacement (knock-on) effect, by the irradiated electron.

### Embodiment 2

Production of Al ultrafine particles as an active metal will be described. similarly to the embodiment 1, an amorphous carbon support film, upon which were disposed spherical Θ-Al₂O₃ particles with a diameter of 100 nm, was arranged on a room temperature stage disposed in a vacuum room of 200kV TEM apparatus. After the vacuum room was evacuated to 1 x 10⁻⁵ Pa, an electron beam of 1.3 x 10²⁰ e/cm².sec (20A/cm²) was irradiated upon the Θ-Al₂O₃ particles disposed on the amorphous carbon support film. By the electron beam irradiation, Al ultrafine particles with a diameter of 5 to 15 nm were produced on the amorphous carbon support film.

Using the Al ultrafine particles as an active metal, a giant fullerene was produced. Using the giant fullerene, an ultrafine particle enclosing fullerene was produced. Specifically, while maintaining the vacuum room (including a vacuum degree) of the TEM apparatus including the amorphous carbon support film bearing the Al ultrafine particles produced, Al ultrafine particles with a diameter of 10 nm were selected from the Al ultrafine particles on the carbon support film. An electron beam (diameter = 250 nm) of 1.3 x 10²⁰ e/cm².sec (20A/cm²) was irradiated upon the Al ultrafine particle together with a bottom layer of the amorphous carbon support film.

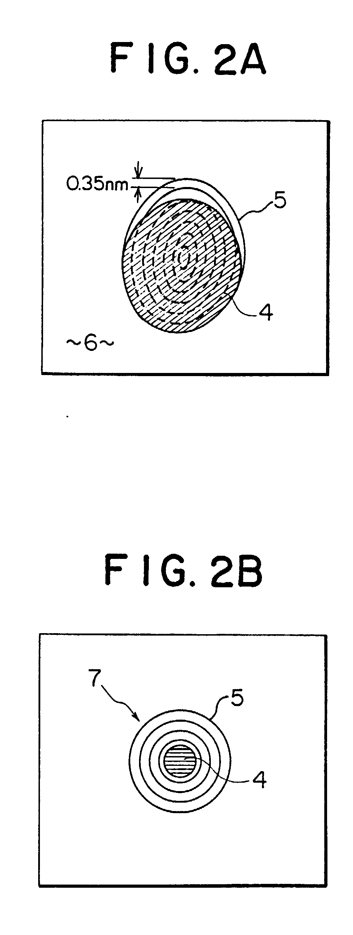

While irradiating the electron beam, a status of the Al ultrafine particle and the amorphous carbon was observed insitu. The result of the observation will be described with reference to schematic diagrams of Fig. 2. After 300 seconds from start of irradiation of the electron beam, carbon textures with a diameter of 10 nm in the form of concentric circles were induced at a bottom portion of the Al ultrafine particle 4. The layer intervals of the carbon textures in this form of concentric circles were about 0.35 nm. Thereby, these were identified as the onion-like graphite 5. Around the onion-like graphite 5, the amorphous carbon 6 was maintained.

With continuing irradiation of the electron beam, the onion-like graphite 5 was gradually contracted, and the Al ultrafine particle 4 was minimized. After 800 to 1000 seconds from start of irradiation of the electron beam, the Al ultrafine particle 4 was minimized to a diameter of about 2 nm, was enclosed in the hollow core portion of the onion-like graphite 5 contracted, and formation of the Al ultrafine particle-enclosing fullerene 7 was observed. In the Al ultrafine particle-enclosing fullerene 7, a diameter of the onion-like graphite 5 was about 10 nm.

Thus, the onion-like graphite 5 that is one type of giant fullerene, and the A1 ultrafine particle-enclosing fullerene 7 which enclosed the A1 ultrafine particle in the hollow core portion of the onion-like graphite 5 were obtained by simultaneous electron beam irradiation upon the amorphous carbon whilst in the presence of the A1 ultrafine particle. Production of the onion-like graphite 5 and the A1 ultrafine particle-enclosing fullerene 7 is apparently based upon both a localized heating effect and an atom displacement (knock-on) effect by the irradiated electron.

As is apparent from the above-mentioned embodiments, according to the present invention, the enclosure of ultrafine particles within a hollow core portion of a giant fullerene can be achieved by electron beam irradiation or similar such radiation, under easily controlled conditions such as on a room temperature stage. There are significant possibilities to develop various manipulations with the electron beam, for example with a diameter of about a nanometer.

As described above, according to the present invention, an ultrafine particle-enclosing fullerene can be produced by a relatively simple process which avoids a separation step. In addition, it can be judged relatively easily whether substances are capable of being enclosed within the fullerene or not. Moreover, the fullerene can be operated and controlled relatively easily. Consequently, the ultrafine particle-enclosing fullerene of the present invention provides a significant contribution to the production of a novel, enclosing fullerene, and their applications and further development.

## Claims

1. An ultrafine particle-enclosing fullerene, comprising a giant fullerene, and a metal aluminium ultrafine particle having a diameter up to 20 nm enclosed in a hollow core portion of said giant fullerene, obtainable by both impinging upon said ultrafine particle disposed on said giant fullerene and by contracting said giant fullerene using electron beam irradiation.

2. An ultrafine particle-enclosing fullerene as claimed in claim 1,
wherein said giant fullerene has been formed by irradiating an electron beam upon a metastable oxide particle disposed on a substrate of amorphous carbon, and wherein said giant fullerene is composed of carbon atoms derived from a carbon source present on a surface layer of said metastable oxide particle.

3. An ultrafine particle-enclosing fullerene, comprising a giant fullerene formed on a portion by irradiating one or more of the following high energy beams, namely: electron beam, corpuscular beam and a photon to an amorphous carbon in the presence of an active aluminium metal, and a metal aluminium ultrafine particle having a diameter up to 20 nm composed of said active aluminium metal enclosed in a hollow core portion of said giant fullerene by contracting said giant fullerene using irradiation produced by said high energy beam.

4. A method for producing an ultrafine particle-enclosing fullerene, comprising the steps of:
producing a giant fullerene on an amorphous carbon film in a vacuum,
disposing an ultrafine particle on said giant fullerene by driving said ultrafine particle using an electron beam, and
enclosing said ultrafine particle in a hollow core portion of said giant fullerene by contracting said giant fullerene using irradiation by an electron beam.

5. A method as claimed in claim 4,
wherein said step of producing said giant fullerene comprises irradiating an electron beam of more than 1 x 10¹⁹ e/cm².sec in a vacuum upon a metastable metal oxide particle disposed on the amorphous carbon film.

6. A method as claimed in claim 4 or 5,
wherein a θ-Al₂O₃ particle is used as said metastable metal oxide particle.

7. A method as claimed in any one of claims 4 to 6,
wherein an Al ultrafine particle with a diameter of 5 to 20 nm is used as said ultrafine particle.

8. A method for producing an ultrafine particle-enclosing fullerene, comprising the step of:
producing a giant fullerene by irradiating in a vacuum, one or more of the following high energy beams, namely: electron beam, a corpuscular beam and a photon upon an active metal on an amorphous carbon substrate on which said active metal is disposed and
enclosing an ultrafine particle composed of said active metal in a hollow core portion of said giant fullerene by contracting said giant fullerene with further irradiation of said high energy beam.

9. A method as claimed in claim 8, wherein an Al ultrafine particle with a diameter of 5 to 10 nm is used as said active metal.

10. A method as claimed in claim 8 or 9, wherein an electron beam of more than 1 x 10¹⁹ e/cm².sec is irradiated as said high energy beam.

## Patentansprüche

1. Ultrafeines, Teilchen einschließendes Fulleren mit einem Riesenfulleren und einem ultrafeinen Aluminiummetalteilchen von bis zu 20 nm Durchmesser in einem Hohlkernteil des Riesenfullerens, erhältlich durch Beschießen des auf dem Riesenfulleren angeordneten, ultrafeinen Teilchens und durch Schrumpfen des Riesenfullerens durch Benutzung einer Elektronenstrahlung.

2. Ultrafeines, Teilchen einschließendes Fulleren nach Anspruch 1, bei dem das Riesenfulleren durch Einstrahlung eines Elektronenstrahls auf ein auf einem Substrat aus amorphem Kohlenstoff angeordnetes, metastabiles Oxidteilchen gebildet wurde und das genannte Riesenfulleren aus Kohlenstoffatomen besteht, die aus einer auf einer Oberflächenschicht des metastabilen Oxidteilchens vorliegenden Kohlenstoffquelle stammen.

3. Ultrafeines, Teilchen einschließendes Fulleren aus einem Riesenfulleren, das auf einem Teil durch Einstrahlung einer oder mehrerer der folgenden Hochenergiestrahlen gebildet wurde, nämlich Elektronenstrahlen, Korpuskularstrahlen und Photonen, auf einen amorphen Kohlenstoff in Gegenwart eines aktiven Aluminiummetalls, und einem ultrafeinen Aluminiummetallteilchen mit einem Durchmesser bis zu 20 nm, bestehend aus dem aktiven Aluminiummetall, das eingeschlossen ist in einem Hohlkernteil des Riesenfullerens durch Schrumpfen des Riesenfullerens unter Benutzung von Strahlung, die durch hochenergetische Strahlen erzeugt wurde.

4. Verfahren zur Herstellung eines ultrafeinen, Teilchen einschließenden Fullerens, bei dem man
in einem Vakuum ein Riesenfulleren auf einem amorphen Kohlenstofffilm erzeugt,
ein ultrafeines Teilchen auf dem Riesenfulleren anordnet durch Antrieb des ultrafeinen Teilchens mit einem Elektronenstrahl, und
das ultrafeine Teilchen in einem Hohlkernteil des Riesenfullerens einschließt durch Schrumpfen des Riesenfullerens unter Benutzung von Elektronenstrahlung.

5. Verfahren nach Anspruch 4, bei dem die Stufe der Erzeugung des Riesenfullerens die Einstrahlung eines Elektronenstrahls von mehr als 1 x 10¹⁹ e/cm².sec im Vakuum auf ein auf dem amorphen Kohlenstofffilm angeordnetes, metastabiles Metalloxidteilchen umfaßt.

6. Verfahren nach Anspruch 4 oder 5, bei dem ein θ-Al₂O₃-Teilchen als das metastabile Metalloxidteilchen eingesetzt wird.

7. Verfahren nach einem der Ansprüche 4 bis 6, bei dem als ultrafeines Teilchen ein ultrafeines Al-Teilchen mit einem Durchmesser von 5 bis 20 nm eingesetzt wird.

8. Verfahren zur Herstellung eines ultrafeinen, Teilchen einschließenden Fullerens, bei dem man
ein Riesenfulleren erzeugt durch Einstrahlen eines oder mehrerer der folgenden hochenergetischen Strahlen, nämlich Elektronenstrahlen, Korpuskularstrahlen und Photonen, im Vakuum auf ein aktives Metall auf einem amorphen Kohlenstoffsubstrat, auf dem das aktive Metall angeordnet ist, und
ein ultrafeines Teilchen aus dem genannten aktiven Metall in einem Hohlkernteil des Riesenfullerens einschließt durch Schrumpfen des Riesenfullerens bei weiterer Bestrahlung mit den Hochenergiestrahlen.

9. Verfahren nach Anspruch 8, bei dem als aktives Metall ein ultrafeines Al-Teilchen mit einem Durchmesser von 5 bis 10 nm eingesetzt wird.

10. Verfahren nach Anspruch 8 oder 9, bei dem als Hochenergiestrahl ein Elektronenstrahl von mehr als 1 x 10¹⁹ e/cm².sec eingestrahlt wird.

## Revendications

1. Fullerène contenant des particules ultrafines, comprenant un fullerène géant et une particule ultrafine d'aluminium métallique ayant un diamètre allant jusqu'à 20 nm enfermé dans une partie formant coeur creux dudit fullerène géant, susceptible d'être obtenu à la fois en percutant ladite particule ultrafine disposée sur ledit fullerène géant et en contractant ledit fullerène géant à l'aide du rayonnement d'un faisceau d'électrons.

2. Fullerène contenant des particules ultrafines selon la revendication 1, dans lequel ledit fullerène géant a été formé en irradiant un faisceau d'électrons sur une particule d'oxyde métastable disposée sur un substrat de carbone amorphe, et dans lequel ledit fullerène géant est composé d'atomes de carbone dérivés d'une source de carbone présente sur une couche superficielle de ladite particule d'oxyde métastable.

3. Fullerène contenant des particules ultrafines, contenant du fullerène géant formé sur une partie en irradiant un ou plusieurs des faisceaux à haute énergie suivants, à savoir : un faisceau d'électrons, un faisceau corpusculaire et un photon sur un carbone amorphe en présence d'un métal d'aluminium actif, et une particule ultrafine d'aluminium métallique ayant un diamètre allant jusqu'à 20 nm, composée dudit métal d'aluminium actif enfermé dans une partie formant coeur creux dudit fullerène géant en contractant ledit fullerène à l'aide du rayonnement produit par ledit faisceau à haute énergie.

4. Procédé de préparation d'un fullerène contenant des particules ultrafines, comprenant les étapes consistant à :
préparer un fullerène géant sur une pellicule de carbone amorphe sous vide,
disposer une particule ultrafine sur ledit fullerène géant en dirigeant ladite particule ultrafine à l'aide d'un faisceau d'électrons, et
enfermer ladite particule ultrafine dans une partie formant coeur creux dudit fullerène géant en contractant ledit fullerène géant à l'aide du rayonnement d'un faisceau d'électrons.

5. Procédé selon la revendication 4, dans lequel ladite étape consistant à produire ledit fullerène géant comprend le rayonnement d'un faisceau d'électrons de plus de 1 x 10¹⁹ e/cm².sec sous vide sur une particule d'oxyde métal métastable agencée sur une pellicule de carbone amorphe.

6. Procédé selon la revendication 4 ou 5, dans lequel une particule θ-Al₂O₃ est utilisée comme particule d'oxyde métallique métastable.

7. Procédé selon l'une quelconque des revendications 4 à 6, dans lequel une particule ultrafine d'Al ayant un diamètre de 5 à 20 nm est utilisée comme dite particule ultrafine.

8. Procédé consistant à préparer un fullerène contenant des particules ultrafines, comprenant les étapes consistant à :
préparer du fullerène géant en irradiant sous vide un ou plusieurs des faisceaux à haute énergie suivants, à savoir : un faisceau d'électrons, un faisceau corpusculaire et un photon sur un métal actif sur un substrat en carbone d'amorphe sur lequel est disposé ledit métal actif et
enfermer une particule ultrafine composée dudit métal actif dans une partie formant coeur creux dudit fullerène géant en contractant ledit fullerène géant avec un autre rayonnement dudit faisceau à haute énergie.

9. Procédé selon la revendication 8, dans lequel une particule ultrafine d'Al ayant un diamètre allant de 5 à 10 nm est utilisée comme dit métal actif.

10. Procédé selon la revendication 8 ou 9, dans lequel un faisceau d'électrons de plus de 1 x 10¹⁹ e/cm².sec est irradié comme dit faisceau à haute énergie.
